**Europäisches Patentamt**

**European Patent Office**

**Office européen des brevets**

(19)

(11) Veröffentlichungsnummer: **0 130 424
B1**

(12) **EUROPÄISCHE PATENTSCHRIFT**

(45) Veröffentlichungstag der Patentschrift:
26.07.89

(51) Int. Cl.⁴: **B 29 C 51/16, B 29 C 45/14**

(21) Anmeldenummer: **84106706.9**

(22) Anmeldetag: **13.06.84**

(54) **Verfahren zur Herstellung von Tasten.**

(30) Priorität: **22.06.83 DE 3322418**

(43) Veröffentlichungstag der Anmeldung:
**09.01.85 Patentblatt 85/2**

(45) Bekanntmachung des Hinweises auf die Patenterteilung:
**26.07.89 Patentblatt 89/30**

(84) Benannte Vertragsstaaten:
**DE FR GB IT**

(56) Entgegenhaltungen:
**CH-A- 199 491
DE-A- 1 629 706
DE-A- 2 114 946
DE-A- 2 141 279
DE-B- 1 629 710**

(73) Patentinhaber: **BAYER AG,
D-5090 Leverkusen 1 Bayerwerk (DE)**

(72) Erfinder: **Wank, Joachim, Dipl.-Ing., Zülpicher Strasse 7,
D-4047 Dormagen 5 (DE)**
Erfinder: **Waldenrath, Werner, Dipl.-Ing., Maastricher
Strasse 40, D-5000 Köln (DE)**

## Beschreibung

Die Erfindung betrifft ein Verfahren zur Herstellung von Tasten mit griffesten, gut lesbaren Schriftzeichen, wobei ein mehrdimensionaler gespritzter oder gegossener Grundkörper mit einem vorgeformten Überzug formschlüssig verbunden wird.

Tasten werden unter anderem zur Betätigung von Schreib- und Rechenmaschinen benötigt. Um die Funktion der verschiedenen Tasten zu kennzeichnen, werden sie mit entsprechenden Symbolen versehen. Zur Herstellung ist bisher für jedes Zeichen ein gesondertes Werkzeug erforderlich. Bei seltenen Schriftzeichen, z.B. bei kyrillischen oder chinesischen Schriften, ist dieser technische Aufwand kaum noch vertretbar. Es hat deshalb nicht an Versuchen gefehlt, die Herstellung zu vereinfachen.

Für Kleinserien werden die Buchstaben auf Roh-Tasten im Tampoprintverfahren gedruckt oder durch Eingravierung mit anschließendem Farbauftrag erstellt.

Der Nachteil dieses Verfahrens besteht darin, daß die Farbe gerade bei den häufig berührten Tasten abgetragen wird, so daß die Schriftzeichen schon nach kurzer Nutzungsdauer nicht mehr einwandfrei lesbar sind.

In dem DE-GM-8 230 442 wird eine Taste beschrieben, bei der auf einer Kalotte mittels eines Rahmens eine flache Folie, die auf der Rückseite mit Symbolen versehen sein kann, befestigt ist.

Der Nachteil dieser Taste besteht darin, daß keine nahtlose Oberfläche vorhanden ist. Bei Säuberungsarbeiten, insbesondere mit Flüssigkeit, kann diese zwischen Kalotte und Folie gelangen, wodurch die Haltbarkeit der Druckfarbe und die Lesbarkeit der Schrift verringert wird. Auch ist die Montage schwierig. Außerdem besteht die Gefahr, daß die Rahmen mutwillig oder unabsichtlich gelöst werden. Eine Verwechslung bei der Remontage ist nicht zu vermeiden.

Gemäß CH-A-199 491 ist ein mit Zeichen versehener Gegenstand, insbesondere Taste, bekannt, welcher aus Preßmasse besteht und das Zeichen als Teil der Preßmasse erhaben trägt, wobei das Zeichen durch einen die Preßmasse bedeckenden Überzug hindurchragt und der Überzug die Oberfläche und die Seitenflächen mit Ausnahme des Zeichens bedeckt und durch Hintergreifen des Grundkörpers an diesem gesichert ist.

Hier müssen sowohl der Grundkörper der Taste als auch der Überzug getrennt mit dem gleichen Zeichen versehen hergestellt werden. Der Aufwand für Lagerhaltung ist unvertretbar.

Aus DE-B-1 629 710 ist es bekannt, einen Gegenstand aus Kunststoff, wie Blumentopf, Eßgeschirr herzustellen, indem aus einer Folie eine räumliche Abformung der Oberfläche des Gegenstandes tiefgezogen wird und das Verbinden der Abformung mit dem Gegenstand durch Spritzgießen des Gegenstandes auf oder in die Abformung unter gleichzeitiger Abstützung derselben erfolgt, wobei die arteigenen Kunststoffe miteinander verschmelzen sollen. Wegen dieses Verschmelzens müssen gedruckte Dekors auf den Folien der dem Grundkörper abgewandten Seite, also außenseitig, angeordnet sein und sind deshalb auf Dauer nicht abriebfest. Tasten mit griffesten Zeichen lassen sich nach diesem Verfahren nicht herstellen.

Aus DE-A-2 114 946 ist ein Verfahren zur Herstellung von Gegenständen mit einer dreidimensionalen mehrfarbigen Oberfläche bekannt, wozu ein recht kompliziertes Druckverfahren benutzt wird. Eine Herstellung von mit Zeichen versehenen Tasten nach diesem Verfahren verbietet sich schon aus Gründen der Wirtschaftlichkeit.

Der Erfindung liegt die Aufgabe zugrunde, ein Verfahren zur Herstellung einer griffsicheren, schmutzunempfindlichen, durchleuchtbaren Taste mit auf Dauer gut lesbaren Schriftzeichen evtl. in verschiedenen Farben zu finden, die mit herkömmlichen Mitteln wirtschaftlich auch bei kleinen Serien herzustellen sind, wobei die Vorratshaltung sich auf Halbzeuge beschränken sollte.

Die Aufgabe wird dadurch gelöst, daß als Überzug transparente Folie auf der später dem Grundkörper zugewandten Seite spiegelbildlich mit Schriftzeichen und/oder Symbolen bedruckt wird und sodann der Tastenform entsprechend tiefgezogen und mit dem Grundkörper verbunden wird.

Die in üblicher Weise wirtschaftlich vorgefertigten und mit Schriftzeichen bzw. Symbolen versehenen flachen Folien können bei Bedarf dem Lagerregal entnommen werden, um dann kurzfristig nach dem Tiefziehen und Ausstanzen auf dem ebenfalls vorgefertigten einheitlichen Grundkörper fixiert zu werden. Dieses wirtschaftliche Verfahren ist sehr flexibel und darüber hinaus leicht automatisierbar. Die mehrdimensional verformte Folie besitzt einerseits eine ausreichende Stabilität, um auf dem Grundkörper sicher – bei gleichzeitiger Abdichtung zur Vermeidung von Verunreinigungen im kritischen Symbolbereich – befestigt zu werden und ist andererseits dünn genug, um die auf der Rückseite der transparenten Folie angebrachten Symbole konturenscharf wiederzugeben. Diese Vorteile sind besonders auffällig bei durchleuchteten Tasten zu nutzen, bei denen das Licht, das durch Folie und Grundkörper aus transparentem Material ohne große Verluste hindurchtritt, die nur in dünnen Schichten aufgetragenen Symbole, die mehrfarbig gestaltet sein können, deutlich heraushebt.

Die auf der Rückseite liegenden Symbole lassen sich durch Bedrucken flacher Folie in einfacher Weise durch Fotodruck herstellen, so daß auch kleinere Serien, wie sie für seltenere Schriftzeichen erforderlich sind, preiswert zu fertigen sind.

Durch eine mehrdimensional zu einer Kappe verformten Folie, deren Innenabmessungen etwas kleiner als die Abmessungen des Grundkörpers sind, läßt sich diese Kappe durch einfaches Überstülpen mit leichtem Druck fixieren. Es ist aber auch denkbar, daß die Folie am unteren Rand einen nach innen vorstehenden Vorsprung besitzt, der dann beim Montieren hinter den Grundkörper geklemmt wird.

Aus DE-A-1 629 706 ist es zwar bekannt, eine thermoplastische Folie entsprechend der gewünschten Oberflächengestalt des zu beschichtenden Spritzgußteils vorzuformen, in die Spritzgußform einzulegen und zu hinterspritzen. Dabei kann es sich um eine Dekorfolie handeln. Eine Lehre, rückseitig und spiegelbildlich mit Schriftzeichen und/oder Symbolen bedruckte Folie zu verwenden, gibt dieses Dokument nicht, zumal dort eine andere Aufgabenstellung vorliegt und die Verbindung der Folie mit dem Grundkörper auch auf andere Weise möglich ist als durch Hinterspritzen.

Nach einer besonderen Durchführungsform wird die mehrdimensional verformte Folie durch Aufkleben mit dem vorgefertigten Grundkörper verbunden.

Durch Benetzen der seitlichen Flächen des Grundkörpers mit Klebstoff kann ein wasserdichter Abschluß erreicht werden, wobei der Klebstoff gleichzeitig für den Festsitz der Folie sorgt.

Als Kunststoff sind Thermoplaste, wie Acryl-Butadien-Mischpolymere, besonders geeignet.

In einer weiteren besonderen Durchführungsform wird als Folie eine vorzugsweise mit strukturierter Oberfläche versehene Polycarbonatfolie eingesetzt.

Eine matte Folie mit reflexionsarmer Oberfläche ist griffig und kratzunempfindlich. Das Polycarbonat zeichnet sich neben hoher Dimensionsstabilität durch gute Transparenz aus, wobei diese Eigenschaften auch auf Dauer erhalten bleiben. Besonders geeignet sind Foliendicken von 0,1–0,3 mm.

Nach dem neuen Verfahren hergestellte Tasten sind in der Zeichnung dargestellt und werden im folgenden näher beschrieben. Es zeigen

Fig. 1 Eine Taste in perspektivischer Ansicht,

Fig. 2 einen Schnitt durch eine Taste mit formschlüssiger Folie,

Fig. 3 einen Schnitt durch eine Leuchttaste mit geklebter Folie.

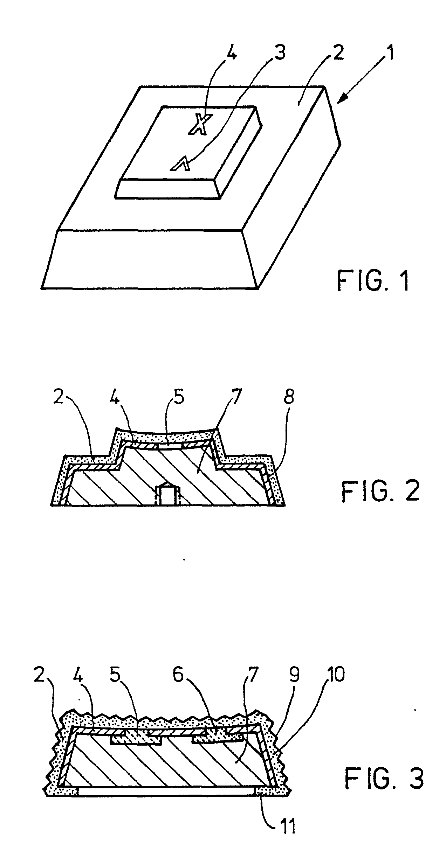

In Fig. 1 ist die Taste 1 oben und seitlich mit einer transparenten Folie 2 versehen, welche rückseitig als Präparierung 3 verschiedenartige Symbole 4, 5 besitzt.

In Fig. 2 ist eine glatte Folie 2, die innen vor dem Tiefziehen als Präparierung 3 mit bestimmten Farben in verschiedenen Bereichen (4, 5) mit Symbolen bedruckt wurde, auf einem Grundkörper 7 angeordnet, wobei die Befestigung auf dem vorgefertigten Grundkörper 7 formschlüssig an den 2–3° geneigten Seitenwänden 8 erfolgt. Denkbar ist es aber auch, die dreidimensional geformte Folie in ein Werkzeug einzulegen und einen intensiven Verbund durch Hinterspritzen von Kunststoff herzustellen.

In Fig. 3 ist eine Taste 1 dargestellt, die folgendermaßen produziert wird:

Eine 0,3 mm dicke Folie aus Polycarbonat, deren äußere Oberfläche 9 (bezogen auf die fertige Taste) strukturiert ist ($R_t$ = 28 µm; $R_A$ = 4 µm; $R_{3z}$ = 18 µm) und deren innere Fläche glänzend oder leicht mattiert ist, wird innen zur Präparierung mit einer hochdeckenden grünen Siebdruckfarbe 4 bedruckt, wobei die Flächen der beiden Symbole 5, 6 ausgespart bleiben.

Im zweiten Druckschritt wird das eine Symbol 5 mit weißer transluzenter Farbe und im dritten Druckschritt das Symbol 6 mit roter transluzenter Farbe hinterlegt.

Diese Folie 2 wird dann dreidimensional verformt und der tiefgezogene Teil 10 als Kappe abgetrennt, deren Rand 11 dann nach dem Aufschieben auf dem Grundkörper 7 umgebördelt wird.

## Patentansprüche

1. Verfahren zur Herstellung von Tasten (1) mit griffesten, gut lesbaren Schriftzeichen (4, 5) und/oder Symbolen (6), wobei ein mehrdimensionaler gespritzter oder gegossener Grundkörper (7) mit einem vorgeformten Überzug (2) formschlüssig verbunden wird, dadurch gekennzeichnet, daß als Überzug (2) transparente Folie (2) auf der später dem Grundkörper (7) zugewandten Seite spiegelbildlich mit Schriftzeichen (4, 5) und/oder Symbolen (6) gedruckt wird und sodann der Tastenform entsprechend tiefgezogen und mit dem Grundkörper (7) verbunden wird.

2. Verfahren nach Anspruch 1, dadurch gekennzeichnet, daß die Folie (2) durch Aufkleben mit dem vorgefertigten Grundkörper (7) verbunden wird.

3. Verfahren nach Anspruch 1 oder 2, dadurch gekennzeichnet, daß als Folie (2) eine mit strukturierter Oberfläche (9) versehene Polycarbonatfolie (2) verwendet wird.

## Claims

1. Process for the production of keys (1) having nonabradable, highly legible characters (4, 5) and/or symbols (6), in which a multi-dimensional injection moulded or cast base body (7) is joined by interlocking with a previously moulded protective layer (2), characterized in that transparent film (2) is printed as protective layer (2) with characters (4, 5) and/or symbols (6) in a mirror-inverted manner on the side which subsequently faces the base body (7) and then is thermoformed to the corresponding key shape and is joined to the base body (7).

2. Process according to Claim 1, characterized in that the film (2) is joined to the previously produced base body (7) by glueing.

3. Process according to Claim 1 or 2, characterized in that a polycarbonate film (2) with a textured surface (9) is used as film (2).

## Revendications

1. Procédé de fabrication de touches à caractères (4, 5) et/ou de symboles (6) bien lisibles, résistants, un corps de base (7) à plusieurs dimensions, moulé par injection ou coulé, étant assemblé sans jeu à un revêtement (2) préformé, caractérisé en ce que l'on utilise comme revêtement (2) une feuille transparente (2) sur laquelle sont imprimés des caractères (4, 5) et/ou des symboles (6) inversés, sur la face tournée ensuite vers le corps de base (7), puis qui est soumise à un emboutissage profond selon la forme de la touche, et assemblée au corps de base (7).

2. Procédé selon la revendication 1, caractérisé en ce que la feuille (2) est assemblée par collage au corps de base (7) préfabriqué.

3. Procédé selon la revendication 1 ou 2, caractérisé en ce que l'on utilise comme feuille (2) une feuille de polycarbonate (2) pourvue d'une surface (9) structurée.

EP 0 130 424 B1

FIG. 1

FIG. 2

FIG. 3

5